# EUROPÄISCHE PATENTANMELDUNG

(11) **EP 4 520 524 A1**
(43) Veröffentlichungstag der Anmeldung: **12.03.2025**
(21) Anmeldenummer: 24188176.2
(22) Anmeldetag: 12.07.2024
(51) Int. Cl.: B32B 9/02, B32B 3/06, B32B 27/10, B32B 29/00, B32B 29/04, B44C 5/04, E04F 13/07, E04F 15/02

(54) **PLATTENFÖRMIGES BAUELEMENT UND EIN VERFAHREN ZU DESSEN HERSTELLUNG**

(30) Priorität: 05.09.2023 DE 102023123888
(71) Anmelder: MeisterWerke Schulte GmbH, 59602 Rüthen-Meiste (DE)
(72) Erfinder: Schulte, Guido, 59602 Rüthen (DE)
(74) Vertreter: Ksoll, Peter

(57) **Zusammenfassung**

Die vorliegende Erfindung betrifft ein Plattenförmiges Bauelement (1) aufweisend eine Trägerschicht (2), eine Dekorschicht (3) und eine sichtseitige Deckschicht (4), wobei die Dekorschicht (3) zwischen der Trägerschicht (2) und der Deckschicht (4) angeordnet ist. Die Erfindung zeichnet sich dadurch aus, dass zwischen der Dekorschicht (3) und der Trägerschicht (2) eine Korkschicht (5) angeordnet ist, wobei die Korkschicht (5) aus einer Mischung aus Korkgranulat (6) und Bindemittel (7) gebildet ist und das Korkgranulat (6) eine Schüttdichte von 50 bis 200 kg/m³ aufweist. Die Erfindung umfasst weiterhin ein Verfahren zur Herstellung eines entsprechenden plattenförmigen Bauelements.

## Beschreibung

Die vorliegende Erfindung betrifft ein plattenförmiges Bauelement gemäß den Merkmalen des Oberbegriffs von Anspruch 1 sowie ein Verfahren zur Herstellung eines plattenförmigen Bauelements gemäß den Merkmalen von Anspruch 16.

Plattenförmige Bauelemente, insbesondere Laminatbodenpaneele, sind im Stand der Technik bekannt. Diese weisen zumeist eine Trägerschicht auf, welche aus einer Holzplatte oder einer Platte aus einem Holzwerkstoff, insbesondere einer HDF- oder MDF-Platte gebildet ist. Auf einer Oberseite der Trägerschicht ist üblicherweise eine Dekorschicht angeordnet, welche beispielsweise ein in Holzoptik bedrucktes Papier umfassen kann. Über der Dekorschicht ist vorzugsweise eine Deckschicht bzw. ein Overlay angeordnet. Diese Schicht dient als Verschleißschutz und ist bevorzugt durchsichtig bzw. transparent ausgebildet, so dass die Dekorschicht weiterhin sichtbar ist. Auf einer Unterseite der Trägerschicht kann eine Gegenzuglage angeordnet sein, welche die inneren mechanischen Spannungen des Schichtverbunds ausgleicht.

Um entsprechende Laminatbodenpaneele herzustellen, wird die zuvor beschriebene Schichtanordnung heiß verpresst.

Aufgrund ihrer harten Schichten besitzen gängige Laminatbodenpaneele nur eine unzureichende Schall- bzw. Trittdämmung, was zu Beeinträchtigungen im Hinblick auf den Geräusch- als auch dem Trittkomfort führt.

Um dieses Problem zu lösen, offenbart die EP 1 911 578 B1 ein Verfahren zur Herstellung eines Fußbodenpaneels, wobei zwischen der Trägerschicht und der Dekorschicht eine expandierende Schicht zur Dämpfung und Trittschalldämmung aufgebracht ist. Bei der expandierenden Schicht handelt es sich bevorzugt um eine Kunstharzschicht, welche mit aufschäumenden Additiven versehen ist. Der Gasanteil des Additivs steigt bei der Einwirkung von Druck und/oder Temperatur an, so dass die Schicht beim Verpressen aufschäumt. Nachteilig ist, dass die Deckschicht aufgrund der expandierenden Schicht eine geringe Festigkeit aufweist, so dass etwaige mit dem Fußbodenpaneel zu verbindende Klicksysteme nicht halten oder die Deckschicht selbst porös wird mit der Folge, dass Feuchtigkeit in das Paneel eindringen kann.

Alternativ ist es im Stand der Technik bekannt, dämpfende Zwischenschichten aus Kunstschäumen oder Verbundschäumen zwischen der Dekorschicht und der Trägerschicht anzuordnen. Diese Schäume werden zumeist als Bahnenware in die Schichtanordnung eingebracht. Dies hat den Nachteil, dass die einzelnen Schichten miteinander verklebt werden müssen. Bei Klebeverbindungen über Wärme müssen die dämpfenden, elastischen Schichten zumeist erst mit der Reaktionswärme durchdrungen werden, eher die Klebstoffe unter der Schicht mit der Trägerschicht reagieren können. Dies führt zu sehr langen Presszeiten und hohen, zumeist ungünstigen Aufheizungen in der Konstruktion.

Ausgehend vom Stand der Technik ist die Aufgabe der vorliegenden Erfindung ein kostengünstig herstellbares plattenförmiges Bauelement sowie dessen Herstellung aufzuzeigen, welches insbesondere erhöhte Dämpfungseigenschaften aufweist.

Die Lösung des gegenständlichen Teils der Aufgabe besteht in einem plattenförmigen Bauelement gemäß Anspruch 1. Der verfahrenstechnische Teil der Aufgabe wird durch das Herstellungsverfahren gemäß Anspruch 16 gelöst.

Vorteilhafte Ausgestaltungen und Weiterbildungen des erfindungsgemäßen plattenförmigen Bauelements und dessen Herstellung sind Gegenstand der abhängigen Ansprüche.

Das plattenförmige Bauelement, bei dem es sich bevorzugt um ein Fußbodenpaneel und besonders bevorzugt um ein Laminatbodenpaneel handelt, weist eine Trägerschicht, eine Dekorschicht und eine sichtseitige Deckschicht auf.

Die Trägerschicht ist insbesondere durch eine Holzwerkstoffplatte ausgebildet. Alternativ sind auch Platten aus anderen natürlichen Materialien, beispielsweise aus nachwachsenden Rohstoffen, z.B. aus Hanffasern oder -Schaben, Strohhalmen aus Gräsern wie Bambus, Palmenfasern oder Fruchtfasern von Ölfrüchten oder auch Kaffeepulver denkbar. Besonders bevorzugt ist die Verwendung einer HDF-Platte oder einer Spanplatte als Trägerschicht. Diese Platten können zudem bis zu 50% Recyclatfasern oder Späne enthalten.

Die Trägerschicht verleiht dem plattenförmigen Bauelement Stabilität und weist vorzugsweise eine Dicke zwischen 3,0 mm und 12,0 mm auf. Insbesondere liegt die Dicke der Trägerschicht im Bereich zwischen 5,0 mm und 9,0 mm.

Die Dekorschicht ist erfindungsgemäß zwischen der Trägerschicht und der Deckschicht angeordnet und ist bevorzugt aus einem Dekorpapier gebildet. Das Dekorpapier basiert besonders bevorzugt auf Zellulose bzw. Zellulosevlies. Die Dekorschicht weist insbesondere eine aufgedruckte und von außen sichtbare Farbschicht auf, so dass dem plattenförmigen Bauelement beispielsweise eine Holzoptik verliehen werden kann.

Die Dekorschicht ist vorzugsweise mit Imprägnierharzen aus der Gruppe der Acrylate oder der Polyurethane imprägniert. Diese erzeugen gegenüber Imprägnaten aus Melaminharzen elastischere Dekorschichten was höhere Stoßbelastungen des Bauelements ermöglicht

Die sichtseitig über der Dekorschicht angeordnete Deckschicht ist bevorzugt ein Overlay. Das Overlay ist eine Verschleißschicht, die für erhöhte Abriebeigenschaften und Kratzbeständigkeit Korundpartikel und/oder Effektpartikel (Glimmer- oder 6Metallicpartikel) enthalten kann. Die Deckschicht bzw. das Overlay ist vorzugsweise durchsichtig bzw. transparent ausgebildet, so dass das darunterliegende Dekor durch die Deckschicht hindurch sichtbar ist. Bevorzugt wird die Deckschicht aus einem Papierträger der mit Melaminharzen imprägniert wurde hergestellt. Dazu wird ein Overlaypapier, insbesondere aus Edelzellulose, in einem Harzbad imprägniert und dabei mit dem Korund verbunden. Alternativ können auch Harze aus der Gruppe der wässrigen Polyurethan-Melaminharzgemische oder Acrylate bzw. Abmischungen davon eingesetzt werden.

Die Deckschicht kann auch papierfrei als reine Lackierung, bevorzugt als verschleißfeste, elastische UV-Lackierung ausgebildet sein. Die Lackierung basiert insbesondere auf einem Acrylat und ist mehrschichtig mittels Walzenapplikatoren aufgetragen. Die Gesamtauftragsmenge beträgt besonders bevorzugt 40 bis 180 g/m². Es hat sich weiterhin als vorteilhaft herausgestellt, wenn in mindestens einer der Schichten antiabrasive Zusätze eingebracht sind.

Das plattenförmige Bauelement zeichnet sich erfindungsgemäß dadurch aus, dass zwischen der Dekorschicht und der Trägerschicht eine Korkschicht angeordnet ist. Die Korkschicht ist aus einer Mischung aus Korkgranulat und Bindemittel gebildet. Das Korkgranulat weist aufgrund seiner Zellstruktur eine hohe Elastizität auf und bildet somit eine Dämpfungsschicht. Kork ist zudem hitze- und druckbeständig, so dass die Materialeigenschaften während des Herstellungsverfahrens des plattenförmigen Bauelements nicht beeinflusst werden. Zudem weist Kork eine gute Haftung zu Bindemitteln auf. Wird das plattenförmige Bauelement belastet, wird das zwischen der Dekorschicht und der Trägerschicht angeordnete Korkgranulat gestaucht und federt in seine Ausgangsposition zurück, sobald das plattenförmige Bauelement nicht mehr belastet wird.

Somit ergeben sich durch das Korkgranulat zwei wesentliche Vorteile. Zum einen dämpft das Korkgranulat den Trittschall beim Begehen des plattenförmigen Bauelements deutlich ab. Die auf das plattenförmige Bauelement wirkende Aufprallenergie wird in Kompressionsarbeit umgewandelt, so dass die imitierten Schallwellen verringert werden. Zum anderen ergibt sich für eine das plattenförmige Bauelement begehende Person durch das dämpfende und federnde Korkgranulat ein deutlich angenehmeres Gehgefühl.

Die erfindungsgemäße Korkschicht ist mittels eines Streuverfahrens auf die Trägerplatte aufgebracht. Das hat gegenüber einer vorgefertigten Bahnenware den Vorteil, dass die Mischung aus Korkgranulat und Bindemittel optimal auf den Gesamtaufbau des Produktes angepasst werden kann. Daher müssen weniger externe Halbfertigprodukte zugekauft oder vorgehalten werden und der energetische Gesamtaufwand zur Produktion des Plattenförmigen Bauelements ist geringer.

Der Kork selbst erfüllt die Grundsätze der Nachhaltigkeit. Kork ist ökologisch, insbesondere, weil hierfür keine Korkeiche gefällt werden muss. Weiterhin weist Kork ein hohes Recyclingpotential auf. Bei Kork handelt es sich zudem um einen nachwachsenden und wiederverwertbaren Rohstoff. Das plattenförmige Bauelement kann somit ohne Plastik und auf Basis von nachwachsenden Rohstoffen wie Holz und Papier hergestellt werden.

Erfindungswesentlich ist weiterhin, dass das Korkgranulat eine Schüttdichte von 50 bis 300 kg/m³, bevorzugt von 50 bis 200 kg/m³ und besonders bevorzugt von 100 bis 150 kg/m³ aufweist. Im Rahmen der Erfindung hat sich herausgestellt, dass durch die Ausbildung der Korkschicht aus einer Mischung aus Korkgranulat und Bindemittel auch bei entsprechend geringe Schüttdichten die Haltbarkeit des plattenförmigen Bauelements als auch die dämpfende Wirkung sichergestellt werden können.

Die Korkgranulate können auch aus Korkrecyclingprodukten stammen. Somit sind verschiedene Ausgangskorkdichten oder auch unterschiedliche Einfärbungen möglich.

Das Korkgranulat kann im Gemisch mit dem Bindemittel, bei dem es sich beispielsweise um ein Trockenpulver handelt, bei der Herstellung des plattenförmigen Bauelements direkt auf die Trägerschicht gestreut werden. Vorzugsweise weist das Gemisch aus Korkgranulat und Bindemittel 3 bis 55 Gew.% Bindemittel auf. Es hat sich als vorteilhaft erwiesen, dass bei der Verpressung des plattenförmigen Bauelements bei Temperaturen größer 150°C auch Bindungskräfte durch den Kork selbst aktiviert werden und somit der Bindemittelanteil auf grundsätzlich kleiner 55% angesetzt werden kann.

Besonders vorteilhaft sind Gemische mit 5-20 Vol.% Faseranteil, vorzugsweise bestehend aus natürlichen, nachwachsenden Rohstoffen wie Zellulosefasern, Hanffasern, Jutefasern, Flachs- oder Baumwollfasern, jeweils mit Faserlängen kleinergleich 4 mm. Der Zusatz entsprechender Fasern reduziert die Wahrscheinlichkeit einer Entmischung des bevorzugt pulverbasierten Bindemittels und des Korkgranulats.

Dem Gemisch aus Kork und Bindemittel können noch weitere Granulate zugemischt werden, beispielsweise Schalen von Nüssen oder Fruchtkernen, die zu einer Stabilisierung des Gesamtgemisches beitragen können und zudem noch natürliche Bindungskräfte durch enthaltene Öle oder Proteine entfalten.

Anschließend kann die Dekorschicht auf die gestreute Korkschicht aufgelegt und der Schichtaufbau zum plattenförmigen Bauelement bei Temperaturen größer 150° verpresst werden. Um beim Auflegen der Dekorschicht, bei der Zuführung des Schichtaufbaus in die Presse und/oder bei dem Schließprozess der Presse eine Veränderung und insbesondere einen Bindemittelaustritt aus dem Schichtaufbau zu vermeiden, ist eine zuvorige Fixierungen der gestreuten Korkschicht sinnvoll. Dies kann durch eine Befeuchtung der gestreuten Korkschicht mit Wasser, Wasserdampf und/oder Additiven bei anschließender IR-Trocknung vor der Aufbringung der Dekorschicht erreicht werden.

Es sind auch alternative Rezepturen zu den Pulverharzen der Korkschicht denkbar, bei denen das Korkgranulat zunächst mit einem hitzeaktivierbaren Bindemittel in einem Mischer umhüllt wird, bei Temperaturen kleiner 90°C vorgetrocknet wird, so dass ein rieselfähiges Gemisch entsteht welches sicher vor Entmischung auf die Trägerschicht gestreut und anschließend gemeinsam mit der aufgelegten Dekorschicht zum plattenförmigen Bauelement verpresst wird.

Als Bindemittel eignen sich insbesondere in wässriger Lösung vorhandene duroplastische Harze wie Melamin- oder Harnstoffharze oder besonders unter Nachhaltigkeitsgesichtspunkten Umwandlungsprodukte aus der Hemicellulose in Furfural, Bindemittel auf der Basis von Furfurylalkoholen, duroplastische Harzsysteme oder Perfluoralkoxy-Polymere. Alternativ sind auch wässrige thermoplastische Harze aus dem Segment der Acrylate einsetzbar. Eine weitere Alterantive stellen Bindemittel der BASF "Acrodur" oder wässrige Bindemittel auf Acrylatbasis dar, beispielsweise Acronal dar.

Die Presszeiten sind abhängig von den Temperaturen und Schichtdicken, vorteilhaft sind Temperaturen größer 150°C und Presszeiten kleiner 2 Minuten.

Die Dekorschichten von plattenförmigen Bauelementen sind bevorzugt imprägniert. Die Imprägnierung kann oberseitig, unterseitig oder allseitig erfolgen.

In einer weiteren vorteilhaften Ausführungsvariante der Erfindung kann zwischen der Trägerschicht und der Dekorschicht eine Zwischenschicht angeordnet sein. Die Zwischenschicht kann insbesondere zwischen zwei Korkschichten angeordnet sein. So ist es möglich ein plattenförmiges Bauelement mit mehr als einer Korkschicht herzustellen. Über eine entsprechende Kombination aus mehreren Schichten kann die Stärke der durch das Korkgranulat ausgebildeten Dämpfungsschicht reguliert werden.

Die Zwischenschicht ist bevorzugt aus einem Papierträger gebildet. Dieser weist vorzugsweise ein Flächengewicht von 25 g/m² bis 85 g/m². Durch die Verwendung eines entsprechend dünnen Papierträgers ist das plattenförmige Bauelement kostengünstig herstellbar.

Die Dekorschicht und/oder die Zwischenschicht können allseitig imprägniert sein.

Insbesondere bei mehreren Korkschichten kann das plattenförmige Bauelement zwischen dem Korkgranulat und der Deckschicht eine Stabilisierungsschicht aufweisen. Die Stabilisierungsschicht ist bevorzugt aus einem Gittergewebe oder einem Kraftpapier gebildet. Insbesondere, wenn die Bruchspannung der Deckschicht bei Belastung des Gesamtaufbaus durch eine hohe Verformung überschritten wird, kann eine entsprechende Stabilisierungsschicht die Verformung der Deckschicht reduzieren und einen Burch verhindern.

Das Korkgranulat ist ein Gemisch aus Granulatkörnern, wobei die Granulatkörner eine Korngröße von 0,2 mm bis 1,5 mm, bevorzugt von 0,3 mm bis 0,8 mm, besonders bevorzugt von 0,2 mm bis 0,6 mm, aufweisen. Im Rahmen der Erfindung hat sich herausgestellt, dass entsprechende Korngrößen für das plattenförmige Bauelement eine optimale Kombination zwischen Elastizität und Stabilität bieten. Zudem sorgt eine weniger gestufte Kornverteilung mit Körnungen größer als 1,5 mm für eine unruhige Oberfläche des plattenförmigen Bauelements.

Unterseitig der Trägerschicht des erfindungsgemäßen plattenförmigen Bauelements kann eine Gegenzuglage vorgesehen sein. Diese dient der Formstabilität und der Feuchtigkeitsabsperrung. Vorzugsweise weist die Gegenzuglage eine Dicke von 0,1 mm bis 3,0 mm auf, insbesondere von 0,6 mm bis 2,5 mm. Die Gegenzuglage besteht beispielsweise aus einem Werkstoff mit einer Dichte von größer oder gleich (≥) 250 kg/m3. Als Gegenzug können auch Folien oder Papiere Anwendung finden. Der Gegenzug kann auch Kork oder andere aufgeschäumte Komponenten enthalten und fungiert dann zusätzlich als integrierte Trittschalldämpfung.

Bevorzugt weist das plattenförmige Bauelement profilierte und mit Klickverbindungsmitteln versehene Seitenränder auf. So können mehrere plattenförmige Bauelemente miteinander gekoppelt werden. Insbesondere ist so die Ausbildung eines zusammenhängenden Fußbodens möglich.

Das erfindungsgemäße Verfahren zur Herstellung eines plattenförmigen Bauelements umfasst die nachfolgenden Verfahrensschritte.

Zunächst wird eine Trägerplatte als Trägerschicht bereitgestellt. Auf der Trägerplatte wird ein Gemisch aus Korkgranulat und Bindemittel zu einer Korkschicht aufgebracht. Das Gemisch kann direkt auf die Trägerplatte aufgestreut werden, oder zunächst auf einer Trägerlage, welche im Anschluss auf der Trägerplatte angeordnet wird. Das Korkgranulat kann dabei gleichmäßig verteilt werden, so dass eine gleichmäßige Dämpfungsschicht im zu verpressenden plattenförmigen Bauelement sichergestellt ist. Das Korkgranulat wird bevorzugt mit einer Schüttdichte von 50 bis 300 kg/m³ aufgestreut. Diese Herstellung ist zudem kostengünstig, da keine Bahnenware für die Ausbildung der Korkschicht benötigt wird.

Anschließend wird auf der Lage aus Korkgranulat und Bindemittel eine Dekorschicht aufgebracht. Optional kann auf der Dekorschicht eine Deckschickt und unterhalb der Trägerplatte eine Gegenzuglage aufgebracht werden.

Es folgt ein Verpressen der Trägerschicht, der Lage aus Korkgranulat und Bindemittel, der Dekorschicht und der optionalen Deckschicht und/oder Gegenzuglage um das plattenförmige Bauelement zu erhalten.

Nach dem Pressvorgang kann das plattenförmige Bauelement zu Einzeldielen verarbeitet werden.

Vorzugsweise wird der Pressvorgang in einer Kurzkontaktpresse mit einer Verweilzeit von 10 bis 45 Sekunden durchgeführt.

Bevorzugt wird der Pressvorgang bei Temperaturen von 150° C bis 220° C durchgeführt. Aufgrund der erfindungsgemäßen dämpfenden und nachgiebigen Korkschicht sind tiefe Oberflächenstrukturen bis 1 mm möglich, ohne das die Trägerplatte verformt werden muss.

Um mehrere plattenförmige Bauelemente miteinander koppeln zu können, können die Seitenwände des plattenförmigen Bauelements profiliert werden. Insbesondere können Klickverbindungsmittel an den Seitenwänden angeordnet werden.

Die Deckschicht kann als Lackierung ausgeführt werden. Die Lackierung erfolgt bevorzugt nach der Verpressung des Schichtaufbaus zum plattenförmigen Bauelement und vor der Auftrennung in Einzeldielen.

Die Erfindung ist nachfolgend anhand von in den Zeichnungen dargestellten Ausführungsbeispielen näher beschrieben. Es zeigen
- Figur 1: einen Querschnitt durch ein plattenförmiges Bauelement in einer ersten Ausführungsvariante;
- Figur 2: einen Querschnitt durch ein plattenförmiges Bauelement in einer zweiten Ausführungsvariante und
- Figur 3: ein erfindungsgemäßes Verfahren zur Herstellung eines plattenförmigen Bauelements.

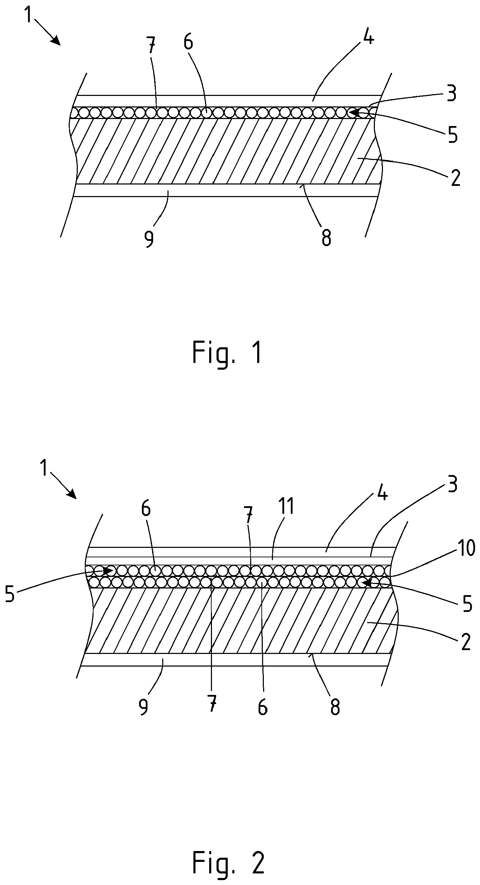

Die Figuren 1 bis 3 sind technisch schematisiert und nicht maßstäblich zu verstehen. In den Figuren werden für gleiche oder funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

Figur 1 zeigt den Querschnitt einer ersten Ausführungsvariante eines plattenförmigen Bauelements 1. Das plattenförmige Bauelement 1 ist ein Laminatbodenpaneel und weist eine aus einer Trägerplatte gebildete Trägerschicht 2, eine aus einem Dekorpapier gebildete Dekorschicht 3 sowie eine sichtseitige Deckschicht 4 auf. Bei der Deckschicht 4 handelt es sich um ein Overlay aus Melaminharz und/oder Polyurethan- und/oder Acrylate- bzw. Abmischungen von beiden.

Die Dekorschicht 3 ist zwischen der Trägerschicht 2 und der Deckschicht 4 angeordnet. Erfindungsgemäß ist zwischen der Dekorschicht 3 und der Trägerschicht 2 eine Korkschicht 5 angeordnet. Das Korkschicht 5 ist aus einer Mischung aus Korkgranulat 6 und Bindemittel 7 gebildet. Das Korkgranulat 6 wird durch eine Vielzahl von Granulatkörnern gebildet. Durch das Korkgranulat 6 weist das plattenförmige Bauelement 1 eine zusätzliche Dämpfungsschicht auf. Sowohl der Tritt- als auch der Geräuschkomfort wird durch diese Dämpfungsschicht bei einem Betreten des plattenförmigen Bauelements 1 erhöht. Zudem ist das Korkgranulat 6 selbst als auch die Herstellung eines plattenförmigen Bauelements 1, welches eine erfindungsgemäße Korkschicht 5 enthält, kostengünstig, da für die Ausbildung der Korkschicht 5 keine Bahnenware benötigt wird.

Erfindungsgemäß weist das Korkgranulat 6 eine Schüttdichte von 50 bis 300 kg/m³ auf. Im Rahmen der Erfindung hat sich herausgestellt, dass durch die Ausbildung der Korkschicht 5 aus einer Mischung aus Korkgranulat 6 und Bindemittel 7 auch entsprechend geringe Schüttdichten die Haltbarkeit des plattenförmigen Bauelements 1 als auch die dämpfende Wirkung sicherstellen.

Die Trägerschicht 2 weist an ihrer der Dekorschicht 3 abgewandten Unterseite 8 eine Gegenzuglage 9 auf. Durch die Gegenzuglage 9 werden etwaige in der Trägerschicht 2 auftretende Spannungen ausgeglichen.

Das Korkgranulat 6 weist eine Korngröße von 0,2 mm bis 1,5 mm auf und ist gleichmäßig verteilt mit dem Bindemittel 7 verbunden.

Figur 2 zeigt den Querschnitt einer weiteren Ausführungsvariante des plattenförmigen Bauelements 1. Hier ist zwischen der Trägerschicht 2 und der Dekorschicht 3 eine Zwischenschicht 10 angeordnet. Die Zwischenschicht 10 ist aus einem Papierträger oder einem Vlies gebildet. Zwischen der Dekorschicht 3 und der Trägerschicht 2 sind zwei Korkschichten 5 ausgebildet, die durch die Zwischenschicht 10 voneinander separiert sind. So ist es möglich ein plattenförmiges Bauelement 1 mit mehr als einer Korkschicht 5 herzustellen. Über eine entsprechende Kombination aus mehreren Korkschichten 5 kann die Stärke der durch die Korkschichten 5 ausgebildeten Dämpfungsschicht reguliert werden.

Der Papierträger der Zwischenschicht 10 weist ein geringes Flächengewicht von 25 g/m² bis 85 g/m² auf und ist somit sehr kostengünstig.

Um die Stabilität des plattenförmigen Bauelements 1 trotz mehrerer Korkschichten 5 zu gewährleisten, ist zwischen der oberen, mithin von der Trägerschicht 2 weiter entfernten Korkschicht 5 und der Dekorschicht 3 eine Stabilisierungsschicht 11 angeordnet. Diese ist aus einem Gittergewebe gebildet und sorgt insbesondere dafür, dass die Bruchspannung der Dekorschicht 3 sowie der Deckschicht 4 bei Belastung des plattenförmigen Bauelements 1 nicht überschritten wird.

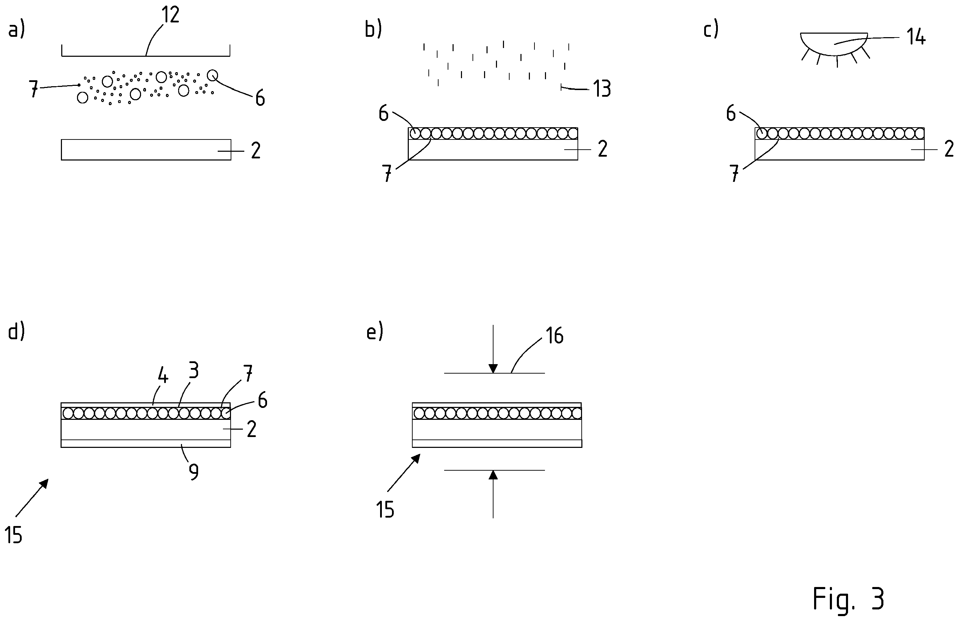

Figur 3 zeigt ein erfindungsgemäßes Verfahren zur Herstellung eines plattenförmigen Bauelements 1. Das Verfahren umfasst die Verfahrensschritte a) bis e).

In Verfahrensschritt a) wird zunächst eine Trägerschicht 2 in Form einer Trägerplatte bereitgestellt. Auf die Trägerschicht 2 wird eine Mischung aus Korkgranulat 6 und Bindemittel 7 gleichmäßig verteilt mittels einer Streueinrichtung 12 aufgebracht. Das Bindemittel 7 ist ein Trockenpulver. Das Korkgranulat 6 und das Bindemittel 7 liegen in einer losen Mischung vor. Das Gemisch aus Korkgranulat 6 und Bindemittel 7 weist 3 bis 55 Gew.% Bindemittel 7 auf.

In Verfahrensschritt b) wird die aufgestreute Korkschicht 5 aus Korkgranulat 6 und Bindemittel 7 auf der Trägerschicht 2 fixiert, sodass diese in den folgenden Verfahrensschritten nicht verrutscht oder sich von der Trägerschicht 2 löst. Hierzu wird die Korkschicht 5 zunächst mit einer Flüssigkeit 13, insbesondere Wasser befeuchtet.

Anschließend wird die Korkschicht 5 in Verfahrensschritt c) durch Wärmeeinwirkung mittels einer Wärmequelle 14 in Form eines IR-Strahlers getrocknet.

Im Anschluss wird in Verfahrensschritt d) unterhalb der Trägerschicht 2 eine Gegenzulage 9 angeordnet. Oberhalb der Korkschicht 5 wird eine Dekorschicht 3 angeordnet, die aus einem Dekorpapier gebildet ist. Darüber wird eine Deckschicht 4 positioniert, wobei es sich bei der Deckschicht 4 um ein Overlay aus Melaminharz handelt. Es ergibt sich ein Mehrschichtkörper 15.

In Verfahrensschritt e) wird der Mehrschichtkörper 15 in einer Kurzkontaktpresse 16 mit einer Verweilzeit von 10 bis 45 Sekunden zum plattenförmigen Bauelement 1 verpresst. Der Pressvorgang wird bei Temperaturen von 150 °C bis 220 °C durchgeführt.

In einer besonders bevorzugten Ausführung wird das plattenförmige Bauelement 1 nach dem Verpressen mit einer abriebfesten, werkseitigen Lackierung versehen.

### Bezugszeichen:

- 1 -: plattenförmiges Bauelement
- 2 -: Trägerschicht
- 3 -: Dekorschicht
- 4 -: Deckschicht
- 5 -: Korkschicht
- 6 -: Korkgranulat
- 7 -: Bindemittel
- 8 -: Unterseite von 2
- 9 -: Gegenzuglage
- 10-: Zwischenschicht
- 11 -: Stabilisierungsschicht
- 12 -: Streueinrichtung
- 13 -: Flüssigkeit
- 14 -: Wärmequelle
- 15 -: Mehrschichtkörper
- 16 -: Kurzkontaktpresse

## Patentansprüche

1. Plattenförmiges Bauelement (1) aufweisend eine Trägerschicht (2), eine Dekorschicht (3) und eine sichtseitige Deckschicht (4), wobei die Dekorschicht (3) zwischen der Trägerschicht (2) und der Deckschicht (4) angeordnet ist, **dadurch gekennzeichnet, dass** zwischen der Dekorschicht (3) und der Trägerschicht (2) eine Korkschicht (5) angeordnet ist, wobei die Korkschicht (5) aus einer Mischung aus Korkgranulat (6) und Bindemittel (7) gebildet ist und das Korkgranulat (6) eine Schüttdichte von 50 bis 300 kg/m³ aufweist.

2. Plattenförmiges Bauelement (1) nach Anspruch 1, **dadurch gekennzeichnet, dass** die Mischung aus Korkgranulat (6) und Bindemittel (7) 3 bis 55 Gew.% Bindemittel (7) aufweist.

3. Plattenförmiges Bauelement (1) nach Anspruch 1 oder 2, **dadurch gekennzeichnet, dass** zwischen der Trägerschicht (2) und der Dekorschicht (3) eine Zwischenschicht (10) angeordnet ist.

4. Plattenförmiges Bauelement (1) nach einem der Ansprüche 1 bis 3, **dadurch gekennzeichnet, dass** das plattenförmige Bauelement (1) ein Fußbodenpaneel, insbesondere ein Laminatbodenpaneel ist.

5. Plattenförmiges Bauelement (1) nach einem der Ansprüche 1 bis 4, **dadurch gekennzeichnet, dass** die Dekorschicht (3) aus einem Dekorpapier oder einem bedruckten Zellulosevlies gebildet ist.

6. Plattenförmiges Bauelement (1) nach einem der Ansprüche 2 bis 5, **dadurch gekennzeichnet, dass** die Zwischenschicht (10) aus einem Papierträger gebildet ist.

7. Plattenförmiges Bauelement (1) nach Anspruch 6, **dadurch gekennzeichnet, dass** der Papierträger ein Flächengewicht von 25 bis 85 g/m² aufweist.

8. Plattenförmiges Bauelement (1) nach einem der Ansprüche 1 bis 7, **dadurch gekennzeichnet, dass** die Dekorschicht (3) allseitig imprägniert ist.

9. Plattenförmiges Bauelement (1) nach einem der Ansprüche 1 bis 8, **dadurch gekennzeichnet, dass** die Deckschicht (4) ein Overlay aus Melaminharz oder mit Imprägnierharzen aus der Gruppe der Acrylate oder der Polyurethane imprägniert ist.

10. Plattenförmiges Bauelement (1) nach einem der Ansprüche 1 bis 8, **dadurch gekennzeichnet, dass** die Deckschicht (4) eine verschleißfeste Lackierung ist.

11. Plattenförmiges Bauelement (1) nach einem der Ansprüche 1 bis 10, **dadurch gekennzeichnet, dass** das Korkgranulat (6) eine Korngröße von 0,2 bis 1,5 mm aufweist, bevorzugt von 0,3 bis 0,8 mm, besonders bevorzugt von 0,2 bis 0,6 mm.

12. Plattenförmiges Bauelement (1) nach einem der Ansprüche 1 bis 11, **dadurch gekennzeichnet, dass** zwischen der Korkschicht (5) und der Deckschicht (4) eine Stabilisierungsschicht (11) angeordnet ist.

13. Plattenförmiges Bauelement (1) nach Anspruch 12, **dadurch gekennzeichnet, dass** die Stabilisierungsschicht (11) aus einem Gittergewebe oder einem Kraftpapier gebildet ist.

14. Plattenförmiges Bauelement (1) nach einem der Ansprüche 1 bis 13, **dadurch gekennzeichnet, dass** die Trägerschicht (2) an ihrer der Dekorschicht (3) abgewandten Unterseite (8) eine Gegenzuglage (9) aufweist.

15. Plattenförmiges Bauelement (1) nach einem der Ansprüche 1 bis 14, **dadurch gekennzeichnet, dass** das plattenförmige Bauelement (1) profilierte Seitenränder, insbesondere Klickverbindungsmittel, aufweist.

16. Verfahren zur Herstellung eines plattenförmigen Bauelements (1) umfassend die folgenden Verfahrensschritte:
• Bereitstellen einer Trägerschicht (2),
• Aufbringen von einem Gemisch aus Korkgranulat (6) und Bindemittel (7) auf der Trägerschicht (2),
• Aufbringen einer Dekorschicht (3) auf der Lage aus Korkgranulat (6) und Bindemittel (7),
• Optionales aufbringen einer Deckschicht (4) auf der Dekorschicht (3) und einer Gegenzulage (9) unterhalb der Trägerschicht (2),
• Verpressen der Trägerschicht (2), der Lage aus Korkgranulat (6) und Bindemittel (7), der Dekorschicht (3) und der optionalen Deckschicht (4) und Gegenzuglage (9) um das plattenförmige Bauelement (1) zu erhalten.

17. Verfahren nach Anspruch 16, **dadurch gekennzeichnet, dass** auf das plattenförmige Bauelement (1) nach dem Verpressen eine verschleißfeste Lackierung aufgebracht wird.

18. Verfahren nach Anspruch 16 oder 17, **dadurch gekennzeichnet, dass** der Pressvorgang in einer Kurzkontaktpresse (16) mit einer Verweilzeit von 10 bis 45 Sekunden durchgeführt wird.

19. Verfahren nach einem der Ansprüche 16 bis 18, **dadurch gekennzeichn** e t, dass der Pressvorgang bei Temperaturen von 150°C bis 220°C durchgeführt wird.

20. Verfahren nach einem der Ansprüche 16 bis 19, **dadurch gekennzeichne**t, dass die Seitenwände des plattenförmigen Bauelements (1) profiliert werden, insbesondere Klickverbindungsmittel an den Seitenwänden angeordnet werden.
